# EUROPÄISCHE PATENTSCHRIFT

(11) **EP 1 277 333 B1**
(45) Veröffentlichungstag und Bekanntmachung des Hinweises auf die Patenterteilung: **16.03.2005**
(21) Anmeldenummer: 01940188.4
(22) Anmeldetag: 25.04.2001
(51) Int. Cl.: H04M 11/04

(54) **VERFAHREN ZUM BETRIEB EINES TELEKOMMUNIKATIONSSYSTEMS**
METHOD FOR OPERATING A TELECOMMUNICATIONS SYSTEM
PROCEDE DE FONCTIONNEMENT D'UN SYSTEME DE TELECOMMUNICATION

(30) Priorität: 27.04.2000 DE 10020567
(43) Veröffentlichungstag der Anmeldung: 22.01.2003
(73) Patentinhaber: T-Mobile Deutschland GmbH, 53227 Bonn (DE); Deutsche Telekom AG, 53113 Bonn (DE)
(72) Erfinder: BRENIG, Heinrich-Helmut, 53340 Meckenheim (DE); FIRCH, Detlef, 53639 Königswinter (DE)
(74) Vertreter: Riebling, Peter, Dr.-Ing.
(86) Internationale Anmeldenummer: PCT/DE2001/001551
(87) Internationale Veröffentlichungsnummer: WO 2001/082579

(56) Entgegenhaltungen:
- DE-A- 19 937 087
- US-A- 5 729 197

## Beschreibung

Die Erfindung betrifft ein Verfahren zum Betrieb eines Telekommunikationssystems und ein Telekommunikationssystem nach dem Oberbegriff der unabhängigen Patentansprüche.

Telekommunikationssysteme, insbesondere digitale Mobilfunksysteme, erfreuen sich zunehmender Beliebtheit, da sie eine Erreichbarkeit der Teilnehmer nahezu immer und an jedem Ort gewährleisten. Neben dem Grunddienst der Telefonie bieten moderne Mobilfunkendgeräte vielerlei Zusatzdienste wie Kurznachrichtendienst, Telefax, E-Mail und zentrale Ansageund Informationsdienste, bei denen der Teilnehmer unter Anwahl einer bestimmten Rufnummer aktuelle Informationen abrufen kann.

Es sind auch andere Dienste und Zusatzfunktionen bekannt. Aus der DE 44 13 974 A1 und hierauf aufbauenden Patentschriften, z.B. der DE 196 29 535 C 2, sind Handapparate einer schnurlosen Telefonanlage bzw. Mobiltelefone bekannt, die entweder eine Notruftaste und einen Speicher für einen Notruftext aufweisen und/oder eine Multifunktionstaste aufweisen, über die Steuerprogramme aktiviert werden können, die in einem Festspeicher oder einem programmierbaren Speicher des Handapparats abgelegt sind.
Da nicht davon auszugehen ist, dass alle Endgerätehersteller die Weiterentwicklung ihrer Endgeräte nach gleichen Kriterien vornehmen werden, sondern eher nach Differenzierung gegenüber ihren Mitbewerbern streben, entsteht für den potentiellen Nutzer solcher Endgeräte und der hierüber aktivierbaren Funktionen (z. B. Überwachungsfunktionen) der Nachteil, nicht frei zu sein in der Wahl seines Endgerätelieferanten. Zudem stellt die primäre Implementierung solcher Funktionen in schnurlose Handapparate eine Beschrankung in der Nutzung solcher Funktionen dar.

Die nach dem Zeitrang der vorliegenden Erfindung veröffentlichte DE 199 37 087 A1 offenbart ein automatisches Tele-Raumüberwachungsverfahren mit einem Telekommunikations-Basisgerät, welches über ein Mikrofon Geräusche aufzeichnen, wiedergeben oder über eine Telekommunikationsverbindung an ein anderes Telekommunikationsgerät übertragen kann. Die US 5 729 197 offenbart ein automatisches Alarmsystem mit einer programmierbaren, zentralen Einheit, an die mehrere Alarmsensoren anschließbar sind. Empfängt die zentrale Einheit ein Alarmsignal von den Alarmsensoren, wird über ein Telekommunikationsnetz eine vordefinierte Alarmmeldung an einen vorbestimmten Empfänger gesendet.

Die oben beschriebenen Alarm- und Überwachungssysteme sind nicht zentral in einem Telekommunikationssystem angeordnet. Eine Nutzung der Systeme mit beliebigen Kommunikationssystemen und Telekommunikationsendeinrichtungen ist nicht möglich. Vielmehr sind diese·Systeme an einen oder wenige bestimmte Benutzer gebunden.

Der Erfindung liegt die Aufgabe zugrunde, ein Verfahren zum Betrieb eines Telekommunikationssystems und ein entsprechendes Telekommunikationssystem vorzuschlagen, mit dem die Nutzung eines oder mehrerer unterschiedlicher Zusatzdienste unabhängig von den verwendeten Kommunikationssystemen und Telekzmmunikationsendeinrichtungen möglich ist.

Die gestellte Aufgabe wird erfindungsgemäß durch die Merkmale der unabhängigen Patentansprüche gelöst.

Das erfindungsgemäße Verfahren und Telekommunikationssystem zeichnet sich dadurch aus, dass die zentrale Einrichtung in dem Telekommunikationsnetz implementiert ist, und in der zentralen Einrichtung ein oder mehrere Steuerprogramme abgelegt sind, wobei die Steuerprogramme durch Signale der Telekommunikationsendeinrichtung aktivierbar bzw. deaktivierbar sind, um in der Telekommunikationsendeinrichtung, der zentralen Einrichtung und/oder in anderen Telekommunikationsendeinrichtungen eine oder mehrere Funktionen auszulösen bzw. die Funktion zu beenden.

Der Vorteil der Erfindung liegt in der Verwendung von zentralen Einrichtungen in Form von Steuereinheiten, die in verschiedenartigen Telekommunikationsnetzen entsprechend der nachfolgenden Anwendungen/Funktionen implementiert werden können und in denen verschiedene Steuerprogramme abgelegt sind, welche von beliebigen Telekommunikationsendeinrichtungen aktivierbar sind und in den Endeinrichtungen, der zentralen Einrichtung und/oder anderen Endeinrichtungen Funktionen auslösen, die eine Nutzung von Überwachungs- und anderen Zusatzfunktionen in allgemeiner, geräteunabhängiger Form ermöglichen bzw. welche zum Beenden der Funktionen deaktivierbar sind. Die Funktionen können dabei die Verwendung und Übertragung von Informationen wie Sprache, Daten, Text, Video etc. einschließen

Dabei ist das beschriebene Verfahren unabhängig von der Art des Telekommunikationssystems, z.B. Mobilfunksystem und/oder Festnetz, und auch unabhängig von den verwendeten Telekommunikationsendeinrichtungen und Telekommunikationsträgern. Durch die Nutzung (Aktivierung/Steuerung) von zentralen Steuereinheiten auf einem oder auf unterschiedlichen geräteunabhängigen Kommunikationsträgersystemen können unterschiedliche Dienste einzeln oder zu mehreren gleichzeitig mit einem oder, abhängig vom Dienst, mit mehreren im Markt erhältlichen Endeinrichtungen und -geräten genutzt werden.

In einer bevorzugten Ausführungsform der Erfindung werden die Steuerprogramme in der zentralen Einrichtung durch Signale der Telekommunikationsendeinrichtung aktiviert, die durch bestimme Tasten, wie Funktionstasten, programmierbare Tasten und/oder Kurzwahltasten der Telekommunikationsendeinrichtung ausgelöst werden. Die Signale können alternativ durch Spracheingabe oder aber durch bestimmte Ereignisse, z.B. zeitgesteuert, ausgelöst werden.

Ein mögliches Steuerprogramm arbeitet als Raumüberwachungsprogramm, bei welchem eine Anrufanzeigeeinrichtung der Telekommunikationsendeinrichtung stumm geschaltet wird, eine einem Mikrofon dieser Endeinrichtung nachgeschaltete Lautstärkepegeleinrichtung zum Erzeugen eines Lautsignals beim Überschreiten eines vorbestimmten, von dem Mikrofon erfassten Geräuschpegels aktiviert wird, mittels des Lautsignals die Anwahl einer in der Endeinrichtung abgelegten Anrufnummer der zentralen Einrichtung aktiviert wird und eine Verbindung zu der zentralen Einrichtung aufgebaut wird, und eine dort gespeicherte Anrufnummer nach Ablauf einer vorbestimmten Zeitdauer angewählt wird. Diese Funktion ist z. B. für die Überwachung von Kleinkindern oder als Einbruchsüberwachung nützlich.

Vorteilhaft erfolgt nach Aktivierung des Raumüberwachungsprogramms und nach Anruf der abgelegten Anrufnummer eine Bestätigungsmeldung seitens der angewählten Anrufnummer zurück zur zentralen Einrichtung bzw. zur Telekommunikationsendeinrichtung.
Dabei ist vorgesehen, dass bei ausbleibender Bestätigung durch die Anrufnummer oder einen angewählten Anschluss der Anwahlvorgang wahlweise auch zu anderen vorher definierten Anrufnummern in vorher definierten Zeitintervallen wiederholt wird, und die zentrale Einheit die Anwahlvorgänge zur Anrufnummer zusammen mit einer Zeitinformation speichert.
Die gespeicherten Anwahlvorgänge sind zusammen mit der Zeitinformation aus der zentralen Einheit abrufbar. Somit ist eine Kontrolle des ordnungsgemäßen Arbeitens der Raumüberwachungsfunktion möglich.

Ein anderes erfindungsgemäß vorgesehenes Steuerprogramm arbeitet als Aktivnotrufprogramm, bei welchem eine oder mehrere bestimmte Tasten der Telekommunikationsendeinrichtung die Funktion einer Notruftaste haben, bei deren Betätigung ein Notrufsignal an die zentrale Einrichtung ausgesandt wird, welche diesen Notruf an eine im Steuerprogramm der zentralen Einheit abgelegte Anrufnummer weiterleitet.
Bei aktiviertem Aktivnotrufprogramm kann vorgesehen sein, dass bei Betätigung einer bestimmten Taste eine in der zentralen Einrichtung abgelegte Notrufnummer angewählt wird, an welche eine in der zentralen Einrichtung abgelegte Botschaft übermittelt wird.

Ein anderes erfindungsgemäß vorgesehenes Steuerprogramm arbeitet als Personenüberwachungsprogramm, bei welchem eine oder mehrere bestimmte Tasten der Endeinrichtung die Funktion einer Rücksetzungstaste haben, und in einem Überwachungsprogramm der zentralen Einrichtung ein Notsignal oder eine Anwahl zu einer in der zentralen Einheit abgelegten Anrufnummer erzeugt wird, wenn die Rücksetzungstaste nach Aktivieren des Personenüberwachungsprogramms nicht innerhalb einer durch einen Zeitgeber in der zentralen Einheit vorgebbaren Zeitdauer betätigt wird, wobei die vorgebbare Zeitdauer erneut beginnt, wenn die Rücksetzungstaste betätigt wird. Dadurch ist eine Personenüberwachung z.B. von kranken oder alten Menschen möglich.
Eine Weiterbildung der Erfindung sieht eine Warneinrichtung vor, welche bei aktiviertem Personenüberwachungsprogramm in der zentralen Einrichtung nach Ablauf eines vorbestimmten Zeitintervalls während eines Warnintervalls ein optisches und/oder akustisches Warnsignal erzeugt, wobei ein Notsignal erzeugt wird, wenn die Rücksetzungstaste nach Beginn des Warnsignals nicht innerhalb eines Warnintervalls betätigt wird, wobei das zeitintervall nach Betätigung der Rücksetzungstaste erneut beginnt.
Ferner kann vorgesehen sein, dass bei aktiviertem Personenüberwachungsprogramm bei einem Notsignal eine vorbestimmte Notrufnummer angewählt und an diese eine im Programm einer zentralen Einrichtung abgelegte Information oder Botschaft übermittelt wird.

Erfindungsgemäß ist ferner ein Steuerprogramm als Passivnotrufprogramm ausgebildet, bei welchem ein Bewegungssensor zum Erzeugen eines Bewegungssignals vorgesehen ist, eine dem Bewegungssensor nachgeschaltete Schwellwerteinrichtung ein Auslösesignal erzeugt, wenn das Bewegungssignal während einer vorbestimmten Zeitdauer unterhalb eines vorbestimmten Schwellwertes liegt, und eine Einrichtung bei Vorliegen des Auslösesignals die Sende-/Empfangseinheit der Telekommunikationsendeinrichtung zum Senden eines Rufsignals an die zentrale Einrichtung oder andere Endeinrichtungen aktiviert.
Der Bewegungssensor kann vorteilhaft als Beschleunigungssensor oder Lagesensor ausgebildet sein. Und extern an die Telekommunikationsendeinrichtung angeschlossen oder in diese integriert werden.
Vorzugsweise erzeugt das aktivierte Passivnotrufprogramm ein Notsignal in der zentralen Einrichtung oder eine Anwahl zu einer in der zentralen Einheit abgelegten Anrufnummer. Dabei kann das Notrufsignal ein über den Lautsprecher der Telekommunikationsendeinrichtung ausgegebenes akustisches Signal sein.
Bei aktiviertem Passivnotrufprogramm kann ferner vorgesehen sein, dass zusammen mit dem Rufsignal eine im Programm einer zentralen Einrichtung abgelegte Information an einen beliebigen Empfänger übermittelt wird.

Eine Weiterbildung der Erfindung sieht vor, dass der Standort der Telekommunikationsendeinrichtung mittels bekannter Ortungsmethoden, z.B. GPS, Peilung, Laufzeitmessung etc., von der zentralen Einrichtung und/oder der Telekommunikationsendeinrichtung automatisch erfasst, aufbereitet und den Steuerprogrammen zur Verfügung gestellt wird.

In einer anderen Weiterbildung der Erfindung ist eine Anrufweiterleiteinrichtung in der zentralen Einheit vorgesehen, die z.B. bei aktiviertem Raumüberwachungsprogramm ankommende Anrufe zu einer anderen Endeinrichtung weiterleitet. In dem Steuerprogramm der zentralen Einrichtung kann ferner eine Funktion zur Erkennung bestimmter Anrufe oder Rufnummern eingerichtet sein, wobei bei einem bestimmten Anruf ohne Aktivieren der Anrufanzeigeeinrichtung eine Verbindung des Anrufers mit der angerufenen Telekommunikationsendeinrichtung hergestellt wird.

Vorteilhaft ist in der Telekommunikationsendeinrichtung ein Speicherbaustein vorhanden, der z.B. bei aktiviertem Raumüberwachungsprogramm vom einem Mikrofon und/oder einer Kamera der Endeinrichtung aufgenommene Signale bei Überschreiten eines Schwellwertes speichert, solange bis eine Verbindung von der Endeinrichtung über die zentrale Einrichtung zu einer anderen Endeinrichtung hergestellt ist. Ferner kann eine Einrichtung vorhanden sein, die über die zentrale Einrichtung eine Verbindung zu der anderen Endeinrichtung herstellt und die gespeicherten Signale an die andere Endeinrichtung überträgt.

Die Speicherfunktion kann auch durch die zentrale Einrichtung übernommen werden, wenn bereits eine Verbindung zwischen der sendenden Telekommunikationsendeinrichtung und der zentralen Einrichtung besteht.

Zur Kostenkontrolle für den Teilnehmer ist es ferner möglich, dass eine in einer zentralen Einrichtung vom Teilnehmer einstellbare Verbindungszeitbegrenzungseinrichtung vorgesehen ist, die z.B. bei aktiviertem Raumüberwachungsprogramm bei Überschreiten eines voreinstellbaren Gebühren- oder Zeitlimits die Verbindung zwischen Telekommunikationsendeinrichtung und zentraler Einrichtung und/oder anderen Telekommunikationsendeinrichtungen unterbricht.

Ein Ausführungsbeispiel der Erfindung wird nachstehend anhand von mehreren Zeichnungsfiguren erläutert. Aus den Zeichnungen und ihrer Beschreibung gehen weitere Merkmale und Vorteile der Erfindung hervor. Es zeigt;
- Figur 1:: einen schematischen Überblick über das erfindungsgemäße Telekommunikationssystem;
- Figur 2:: den schematischen Aufbau des Telekommunikationssystems;

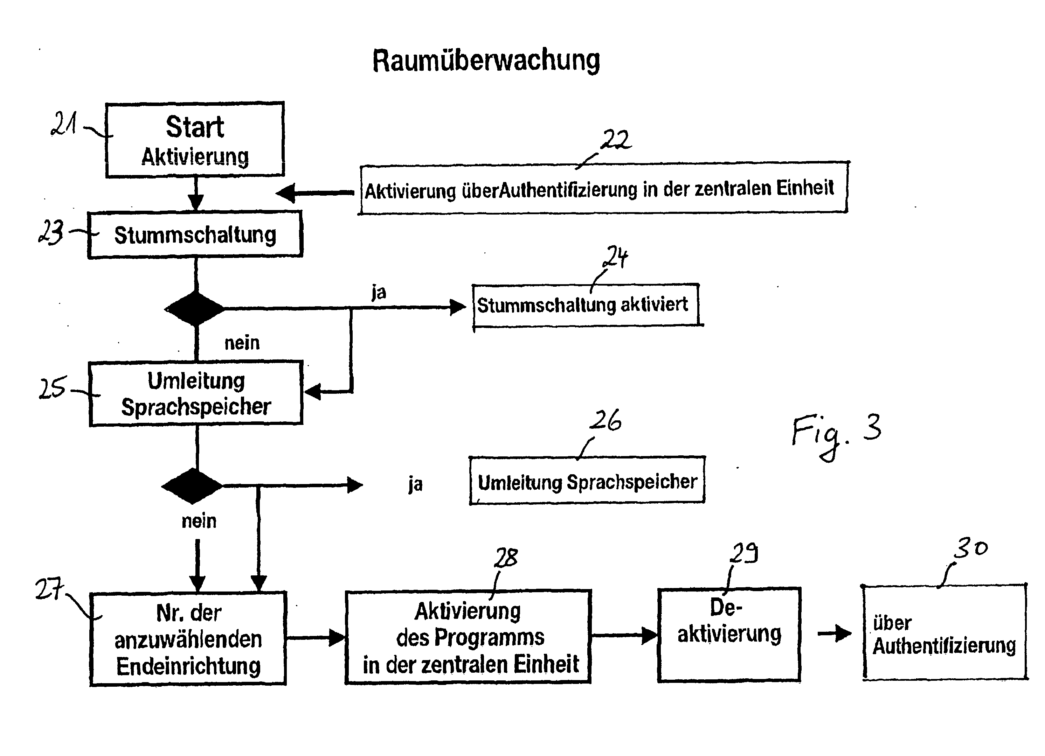

- Figur 3:: Darstellung einer Raumüberwachung unter Anwendung des erfindungsgemäßen Verfahrens und Telekommunikationssystems;
- Figur 4:: schematische Darstellung eines Kommunikationsendgeräts zur Verwendung mit dem erfindungsgemäßen Verfahren.

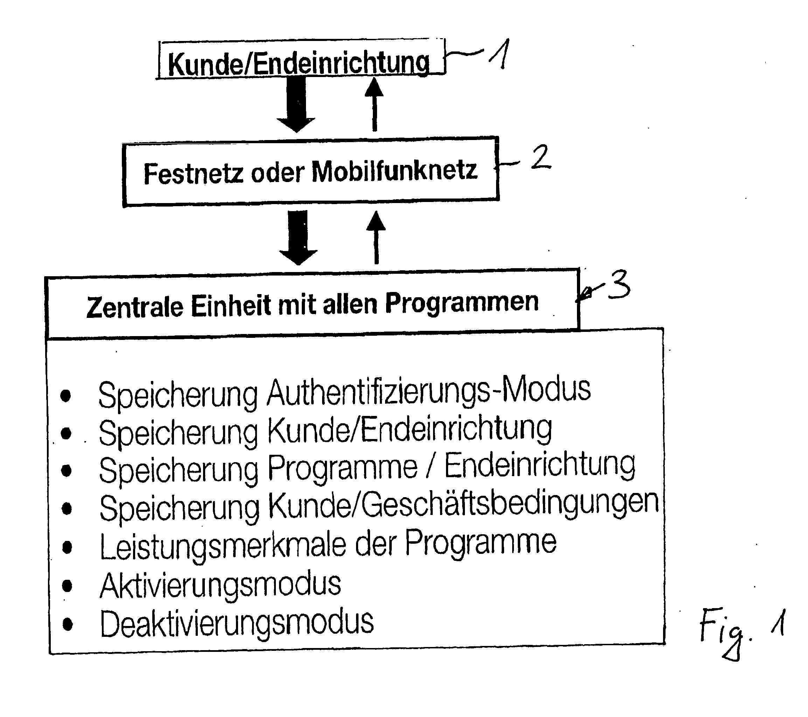

In Figur 1 ist ein schematischer Überblick über das erfindungsgemäße Telekommunikationssystem gezeigt. Der Kunde kommuniziert mit seiner Telekommunikationsendeinrichtung 1 über ein Kommunikationsnetz 2 mit einer zentralen Einrichtung 3. Das Kommunikationsnetz 2 kann dabei wahlweise ein Festnetz oder Mobilfunknetz oder ein anderes geeignetes Kommunikationsnetz sein.

In der zentralen Einrichtung 3 sind neben allgemeinen Einrichtungen und Funktionen verschiedene Steuerprogramme abgelegt, die durch Signale der Telekommunikationsendeinrichtung 1 aktivierbar bzw. deaktivierbar sind, um in der Telekommunikationsendeinrichtung 1, der zentralen Einrichtung 3 und/oder in anderen Telekommunikationsendeinrichtungen eine oder mehrere Funktionen auszulösen bzw. diese Funktionen passiv zu stellen bzw. zu beenden. Neben diesen Steuerprogrammen umfasst die zentrale Einrichtung 3 Funktionen zur Speicherung und Authentifizierung des Teilnehmers bzw. dessen Endeinrichtung 1, Funktionen zur Speicherung von Daten des Kunden bzw. Informationen der Endeinrichtung 1, Funktionen zur Speicherung von Programmen, Funktionen zur Speicherung von Kundendaten oder Geschäftsbedingungen, eine Liste über die Leistungsmerkmale der Steuerprogramme, einen durch den Teilnehmer bzw. die Endeinrichtung 1 steuerbaren Aktivierungsmodus sowie einen entsprechenden Deaktivierungsmodus für die Funktionen in der zentralen Einrichtung 3.

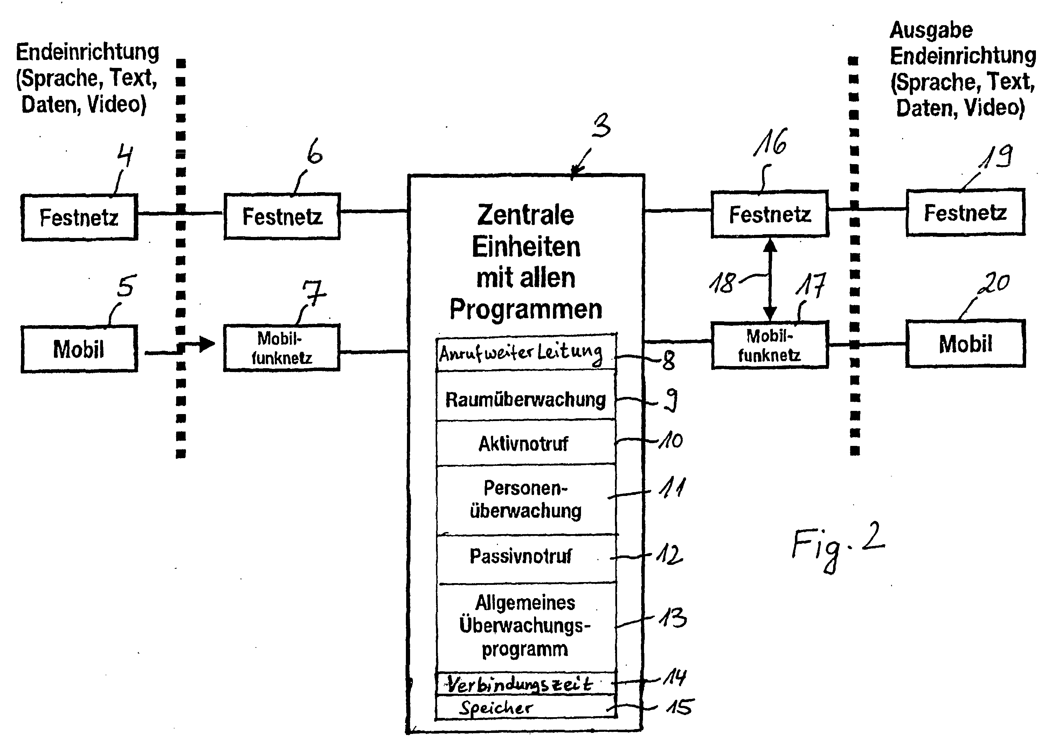

Figur 2 zeigt den schematischen Aufbau des Telekommunikationssystems, wobei im Mittelpunkt die zentrale Einheit bzw. die zentralen Einheiten 3 mit den entsprechenden Steuerprogrammen stehen. Mittels geeigneter Telekommunikationsendeinrichtungen 4, 5, die als Festnetzendeinrichtungen 4 bzw. Mobilendeinrichtungen 5 ausgebildet sein können, kann über das jeweilige Telekommunikationsnetz, das heißt, Festnetz 6 oder Mobilfunknetz 7, eine Verbindung zur zentralen Einheit 3 aufgebaut werden. Diese Verbindung wird durch Signale der Telekommunikationsendeinrichtungen 4, 5 ausgelöst bzw. aktiviert, wonach vorzugsweise in der Telekommunikationsendeinrichtung 4,5 bestimmte Funktionen ausgelöst werden. Diese Funktionen, die in der Telekommunikationsendeinrichtung 4, 5 ausgelöst werden, werden durch in der zentralen Einheit 3 gehaltene Steuerprogramme 8 bis 14 ausgelöst und gesteuert, wobei entsprechende Informationen oder Steuerprogramme zur Steuerung der Telekommunikationsendeinrichtung 4, 5 über das Kommunikationsnetz 6,7 an die entsprechende Endeinrichtung 4, 5 übermittelt werden.

Erfindungsgemäß umfasst die zentrale Einheit 3 eine Funktion der Anrufweiterleitung, die dafür sorgt, dass bei einem Anruf, z.B. für das Telekommunikationsendgerät 4, über dessen Rufnummer die übliche akustische und/oder optische Anrufanzeigeeinrichtung stumm bleibt und der Anruf an eine andere, vom Teilnehmer bzw. Besitzer der Endeinrichtung 4 vorgegebene Rufnummer weitergeleitet wird.

Ein Raumüberwachungsprogramm 9 bietet die Möglichkeit, z.B. vom Mikrofon der Endeinrichtung 4 aufgenommene Geräusche über das Telekommunikationsnetz 6 zur zentralen Einheit 3 und weiter über ein Telekommunikationsnetz 16 an eine andere Endeinrichtung 19 zu übertragen, welche Endeinrichtung durch Kennzeichnung ihrer Rufnummer vom Benutzer der Endeinrichtung 4 frei vorgegeben werden kann.

Die akustischen Überwachungssignale der Endeinrichtung 4 können ebenfalls in einem Speichermodul 15 der zentralen Einheit 3 zwischengespeichert und zum Abruf durch z.B. die Endeinrichtung 19 bereitgestellt werden. Mittels eines allgemeinen Überwachungsprogramms 13 kann vorgesehen sein, dass der Teilnehmer der Endeinrichtung 4, dessen Anrufnummer in der zentralen Einheit abgespeichert ist, von einer beliebigen Endeinrichtung 19 eine Verbindung über die zentrale Einheit 3 zur Endeinrichtung 4 herstellen kann und dadurch eine Verbindung mit dem Mikrofon und dem Lautsprecher der Endeinrichtung 4 hergestellt wird, so dass der Teilnehmer direkt Zugriff auf den zu überwachenden Raum hat, in dem sich die Endeinrichtung 4 befindet.

Ein weiteres Programm-Modul in der zentralen Einheit 3 ist das Aktivnotrufprogramm 10, welches aktiviert wird, wenn z.B. bei der Endeinrichtung 4 eine bestimmte Notruftaste betätigt wird, so dass nachfolgend durch das Aktivnotrufprogramm 10 vorgegebene Schritte durch die zentrale Einheit 3 initiiert und durchgeführt werden, z. B. die Herstellung einer Verbindung über das Mobilfunknetz 17 zu einem Mobilendgerät 20, mit welchem der Notruf der Endeinrichtung 4 empfangen wird.

Ein weiteres Programm-Modul ist die Personenüberwachung 11, welche z.B. durch die Endeinrichtung 5 aktiviert werden kann. Dabei hat eine Taste der Endeinrichtung 5 die Funktion einer Löschtaste und es wird in der zentralen Einrichtung 3 ein Notsignal erzeugt, wenn die Löschtaste der Endeinrichtung 5 nach Aktivieren des Personenüberwachungsprogramms 11 nicht innerhalb einer durch einen Zeitgeber vorgebbaren Zeitdauer betätigt wird, wobei die vorgebbare Zeitdauer erneut beginnt, wenn die Löschtaste betätigt wird. Der Zeitgeber kann dabei entweder in der Endeinrichtung 5 oder aber in der zentralen Einheit 3 angeordnet sein.

Ein Passiv-Notrufprogramm 12 ermöglicht es, in Verbindung mit z.B. der Endeinrichtung 5 und einem mit der Endeinrichtung 5 verbundenen Bewegungssensor ein Notrufsignal zu erzeugen, wenn der Bewegungssensor für eine bestimmte Zeitdauer kein ausreichendes Bewegungssignal abgibt. Dies ermöglicht es der Endeinrichtung 5, ein Notrufsignal abzugeben, auch wenn sein Träger nicht mehr zu seiner Bedienung in der Lage ist.

Ein weiteres in der zentralen Einheit 3 vorgesehenes Programm-Modul ist die Überwachung der Verbindungszeit 14, wobei vom Teilnehmer bei Überschreiten eines voreinstellbaren Gebühren- oder Zeitlimits die Verbindung zwischen Telekommunikationseinrichtung, z.B. 4, und zentraler Einrichtung 3 und/oder anderen Telekommunikationseinrichtungen 19 unterbrochen wird.

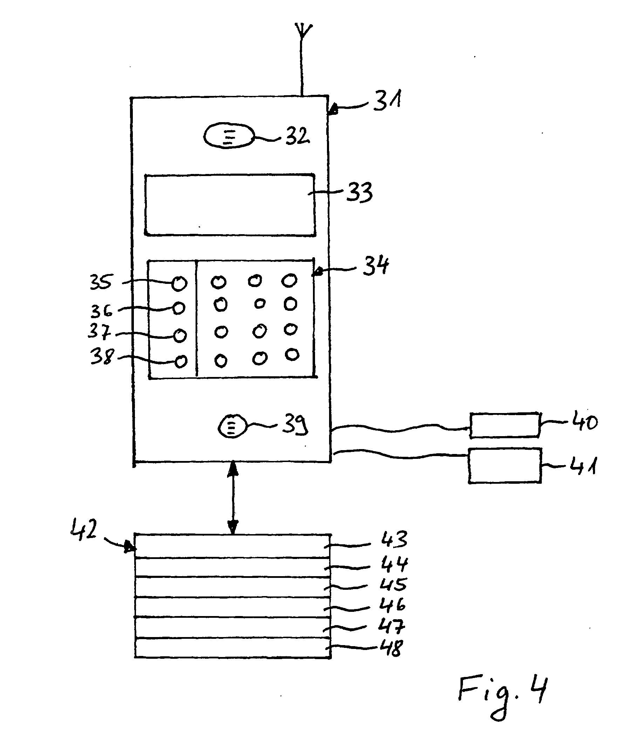

Anhand der Raumüberwachung 9 wird nun ein Programm-Modul der zentralen Einheit 3 beschrieben. In einem ersten Verfahrensschritt 21 erfolgt die Aktivierung des Raumüberwachungsprogrammes 9 durch Betätigung einer Funktionstaste 37 einer Endeinrichtung 31 durch den Teilnehmer (vgl. Figur 4). Diese Aktivierung initiiert eine Kommunikationsverbindung zwischen der Endeinrichtung über ein Telekommunikationsnetz zur zentralen Einrichtung 3 (vgl. Figur 2). Nach dem Verbindungsaufbau erfolgt eine Authentifizierung des Teilnehmers in der zentralen Einheit 3 gemäß Verfahrensschritt 22. Ist der Teilnehmer zur Nutzung der Raumüberwachungsfunktion berechtigt, so erfolgt vorzugsweise eine Stummschaltung der Anrufanzeigeeinrichtung der Endeinrichtung 31, um die zu überwachende Person, z.B. ein Kleinkind, nicht zu stören (Schritt 23, 24). Wird keine Stummschaltung gewünscht, wird Verfahrensschritt 24 ausgelassen, und es wird zu Verfahrensschritt 25 übergegangen, welcher die Möglichkeit bietet, die von der Endeinrichtung 31 aufgenommenen Signale in einen Speicher 15, 46 umzuleiten, der sich entweder in der Endeinrichtung 31 oder der zentralen Einheit 3 befindet.
Ist dies gewünscht, erfolgt die Umleitung der von der Endeinrichtung aufgenommenen Signale in den Speicher (Schritt 26). Ist es nicht gewünscht, so erfolgt durch die zentrale Einheit eine Abfrage der Rufnummer der anzuwählenden Endeinrichtung, zu der die von der Endeinrichtung 31 aufgenommenen akustischen Signale übertragen werden sollen (Schritt 27). Danach erfolgt die eigentliche Durchführung des Raumüberwachungsprogrammes in der zentralen Einheit 3 (Schritt 28), wobei über ein Telekommunikationsnetz 16 die Verbindung zu einer Endeinrichtung 19 anhand der anzuwählenden Rufnummer hergestellt wird (Figur 2). Vorzugsweise erfolgt jedoch nur ein Verbindungsaufbau zwischen den Endeinrichtungen 31 und 19, wenn der von der Endeinrichtung 31 aufgenommene Geräuschpegel einen gewissen Schwellwert überschreitet. Wird das Raumüberwachungsprogramm nicht mehr gewünscht, so erfolgt gemäß Schritt 29 die Deaktivierung des Programmes über eine erneute Authentifizierung (Schritt 30) des entsprechenden Teilnehmers.

Die Aktivierung der verschiedenen Programm-Module wie auch Ausgabe über ein Endgerät kann sowohl über den Festnetz-Übertragungsweg (Endeinrichtung 4 und Telekommunikationsnetz 6) als auch über den Mobilfunk-Übertragungsweg (Endeinrichtung 5 und Telekommunikationsnetz 7) erfolgen. Auch eine gemischte Verwendung von Festnetz-Übetragungsweg und Mobilfunk-Übertragungsweg ist möglich.

Figur 4 zeigt eine schematische Darstellung eines Kommunikations-Endgeräts 31 zur Verwendung mit dem erfindungsgemäßen Verfahren. Das Kommunikationsendgerät 31 kann in Form eines Mobilfunkendgerätes ausgebildet sein, welches einen Bedienteil und ein Software-/Hardware-Modul 42 aufweist, welche in einem gemeinsamen, nicht dargestellten Gehäuse untergebracht sind.

Das Mobiltelefon 31 umfasst einen Lautsprecher 32, eine Anzeigeeinheit 33, ein Tastenfeld 34, verschiedene Mehrfunktionen- oder Spezialtasten 35 bis 38, wie Notruftaste, Rücksetzungstaste, Funktionstaste und Kurzwahltaste, sowie ein Mikrofon 39. Das Software-/Hardware-Modul 42 des Mobiltelefons 31 kann verschiedene Einrichtungen und Funktionen aufweisen, wie z.B. eine Einrichtung zur Spracherkennung 43, eine Einrichtung 44 zur Erkennung eines gewissen Lautstärkepegels des Mikrofons 39, eine Einrichtung 45 zur Erkennung eines Schwellwertes von extern oder intern erzeugten Signalen, eine Speichereinrichtung 46, ein GPS-Ortungssystem 47 sowie einen zeitgeber 48. Als externe Module lassen sich z. B. ein Bewegungssensor 40 an das Mobiltelefon 31 anschließen sowie ein Kameramodul 41, welches auch in dem Mobiltelefon integriert sein kann.

### Zeichnungslegende

- 1: Telekommunikationsendeinrichtung
- 2: Telekommunikationsnetz
- 3: zentrale Einheit
- 4: Endeinrichtung (Fest)
- 5: Endeinrichtung (Mobil)
- 6: Telekommunikationsnetz (fest)
- 7: Telekommunikationsnetz (mobil)
- 8: Programmmodul
- 9: Programmmodul
- 10: Programmmodul
- 11: Programmmodul
- 12: Programmmodul
- 13: Programmmodul
- 14: Programmmodul
- 15: Speichermodul
- 16: Telekommunikationsnetz (fest)
- 17: Telekommunikationsnetz (mobil)
- 18: Netzübergang
- 19: Endeinrichtung (Fest)
- 20: Endeinrichtung (Mobil)
- 21: Verfahrensschritt
- 22: Verfahrensschritt
- 23: Verfahrensschritt
- 24: Verfahrensschritt
- 25: Verfahrensschritt
- 26: Verfahrensschritt
- 27: Verfahrensschritt
- 28: Verfahrensschritt
- 29: Verfahrensschritt
- 30: Verfahrensschritt
- 31: Mobilfunkendgerät
- 32: Lautsprecher
- 33: Anzeigeeinrichtung
- 34: Tastenfeld
- 35: Notruftaste
- 36: Rücksetzungstaste
- 37: Funktionstaste
- 38: Kurzwahltaste
- 39: Mikrofon
- 40: Bewegungssensor
- 41: Kameramodul
- 42: Software-/Hardwaremodul
- 43: Spracherkennung
- 44: Lautstärkepegelerkennung
- 45: Schwellwerterkennung
- 46: Speicher
- 47: GPS-Ortung
- 48: Zeitgeber

## Patentansprüche

1. Verfahren zum Betrieb eines Telekommunikationssystems mit mindestens einer zentralen Einrichtung (3) und mindestens einer Telekommunikationsendeinrichtung (1; 4; 5; 31), die zur Kommunikation mit der zentralen Einrichtung (3) und/oder anderen Telekommunikationsendeinrichtungen (19; 20) über mindestens ein Telekommunikationsnetz (2; 6; 7; 16; 17) ausgebildet ist, wobei die zentrale Einrichtung (3) in dem Telekommunikationsnetz (2; 6; 7; 16; 17) implementiert ist, und in der zentralen Einrichtung (3) ein oder mehrere Steuerprogramme (8-14) abgelegt sind,
wobei die Steuerprogramme durch Signale der Telekommunikationsendeinrichtung (1; 4; 5; 31) aktivierbar sind, um in der Telekommunikationsendeinrichtung (1; 4; 5; 31), der zentralen Einrichtung (3) und/oder in anderen Telekommunikationsendeinrichtungen (19; 20) eine oder mehrere Funktionen auszulösen, **dadurch gekennzeichnet, dass** ein Steuerprogramm (9) als Raumüberwachungsprogramm arbeitet, um von einem Mikrofon der Endeinrichtung (4) aufgenommene Geräusche über mindestens ein Telekommunikationsnetz (6; 19) zur zentralen Einheit (3) und weiter an eine andere Endeinrichtung (19) zu übertragen,
dass ein Steuerprogramm (10) als Aktivnotrufprogramm arbeitet, welches aktiviert wird, wenn bei der Endeinrichtung (4) eine bestimmte Notruftaste betätigt wird, so dass nachfolgend durch das Aktivnotrufprogramm (10) vorgegebene Schritte durch die zentrale Einheit (3) initiiert und durchgeführt werden,
dass ein Steuerprogramm (11) als Personenüberwachungsprogramm arbeitet, bei welchem eine oder mehrere bestimmte Tasten der Endeinrichtung die Funktion einer Rücksetzungstaste (36) haben, und in einem Überwachungsprogramm der zentralen Einrichtung (3) ein Notsignal oder eine Anwahl zu einer in der zentralen Einheit abgelegten Anrufnummer erzeugt wird, wenn die Rücksetzungstaste nach Aktivieren des Personenüberwachungsprogramms nicht innerhalb einer durch einen Zeitgeber (48) vorgebbaren Zeitdauer betätigt wird,
wobei vorgebbare Zeitdauer erneut beginnt, wenn die Rücksetzungstaste innerhalb der Zeitdauer betätigt wird, und dass ein Steuerprogramm (12) als Passivnotrufprogramm arbeitet, das in Verbindung mit der Endeinrichtung (5) und einem mit der Endeinrichtung (5) verbundenen Bewegungssensor ein Notrufsignal zu erzeugen, wenn der Bewegungssensor für eine bestimmte Zeitdauer kein ausreichendes Bewegungssignal abgibt.

2. Verfahren nach Anspruch 1, **dadurch gekennzeichnet, dass** die Steuerprogramme (8-14) durch Signale der Telekommunikationsendeinrichtung (1; 4; 5; 31) aktiviert werden, die durch bestimmte Tasten, wie Funktionstasten, programmierbare Tasten und/oder Kurzwahltasten (35-38) der Telekommunikationsendeinrichtung ausgelöst werden.

3. Verfahren nach einem oder mehreren der vorhergehenden Ansprüche, **dadurch gekennzeichnet, dass** die Steuerprogramme (8-14) durch Signale der Telekommunikationsendeinrichtung (1; 4; 5; 31) aktiviert werden, die durch Spracheingabe oder durch bestimmte Ereignisse ausgelöst werden.

4. Verfahren nach einem oder mehreren der vorhergehenden Ansprüche, **dadurch gekennzeichnet, dass** ein Steuerprogramm (9) als Raumüberwachungsprogramm arbeitet, bei welchem eine Anrufanzeigeeinrichtung der Telekommunikationsendeinrichtung (31) stumm geschaltet wird, eine einem Mikrofon (39) dieser Endeinrichtung nachgeschaltete Lautstärkepegeleinrichtung (44) zum Erzeugen eines Lautsignals beim Überschreiten eines vorbestimmten, von dem Mikrofon erfassten Geräuschpegels aktiviert wird, und mittels des Lautsignals die Anwahl einer in der Endeinrichtung abgelegten Anrufnummer der zentralen Einrichtung (3) aktiviert und eine Verbindung zu der zentralen Einrichtung aufgebaut wird, und eine im dort gespeicherten Steuerprogramm enthaltene Anrufnummer nach Ablauf einer vorbestimmten Zeitdauer angewählt wird.

5. Verfahren nach einem oder mehreren der vorhergehenden Ansprüche, **dadurch gekennzeichnet, dass** nach Aktivierung des Raumüberwachungsprogramms (9) und nach Anruf der abgelegten Anrufnummer eine Bestätigungsmeldung seitens der angewählten Anrufnummer erfolgt.

6. Verfahren nach einem oder mehreren der vorhergehenden Ansprüche, **dadurch gekennzeichnet, dass** bei ausbleibender Bestätigung durch die Anrufnummer oder einen angewählten Anschluss der Anwahlvorgang in vorher definierten Zeitintervallen wiederholt wird, und die zentrale Einrichtung (3) die Anwahlvorgänge zur Anrufnummer zusammen mit einer Zeitinformation speichert.

7. Verfahren nach einem oder mehreren der vorhergehenden Ansprüche, **dadurch gekennzeichnet, dass** die gespeicherten Anwahlvorgänge zusammen mit der Zeitinformation aus der zentralen Einrichtung (3) abrufbar sind.

8. Verfahren nach einem oder mehreren der vorhergehenden Ansprüche, **dadurch gekennzeichnet, dass** ein Steuerprogramm (10) als Aktivnotrufprogramm arbeitet, bei welchem eine oder mehrere bestimmte Tasten der Telekommunikationsendeinrichtung (31) die Funktion einer Notruftaste (35) haben, bei deren Betätigung ein Notrufsignal an die zentrale Einrichtung (3) ausgesandt wird, welche diesen Notruf an mindestens eine im Steuerprogramm der zentralen Einrichtung abgelegte Anrufnummer weiterleitet.

9. Verfahren nach einem oder mehreren der vorhergehenden Ansprüche, **dadurch gekennzeichnet, dass** bei aktiviertem Aktivnotrufprogramm bei Betätigung einer bestimmten Taste der Endeinrichtung (31) eine in der zentralen Einrichtung (3) abgelegte Notrufnummer angewählt und eine in der zentralen Einrichtung abgelegte Botschaft an einen bestimmten Empfänger übermittelt wird.

10. Verfahren nach einem oder mehreren der vorhergehenden Ansprüche, **dadurch gekennzeichnet, dass** eine Warneinrichtung vorgesehen ist, welche bei aktiviertem Personenüberwachungsprogramm in der zentralen Einrichtung (3) nach Ablauf eines vorbestimmten Zeitintervalls während eines Warnintervalls ein optisches und/oder akustisches Warnsignal erzeugt, wobei ein Notsignal erzeugt wird, wenn die Rücksetzungstaste (36) nach Beginn des Warnsignals nicht innerhalb eines Warnintervalls betätigt wird, wobei das Zeitintervall nach Betätigung der Rücksetzungstaste erneut beginnt.

11. Verfahren nach einem oder mehreren der vorhergehenden Ansprüche, **dadurch gekennzeichnet, dass** bei aktiviertem Personenüberwachungsprogramm bei einem Notsignal mindestens eine vorbestimmte Notrufnummer angewählt und an diese eine im Programm einer zentralen Einrichtung (3) abgelegte Information oder Botschaft übermittelt wird.

12. Verfahren nach einem oder mehreren der vorhergehenden Ansprüche, **dadurch gekennzeichnet, dass** ein Steuerprogramm (12) als Passivnotrufprogramm arbeitet, bei welchem ein Bewegungssensor (40) zum Erzeugen eines Bewegungssignals vorgesehen ist, eine dem Bewegungssensor nachgeschaltete Schwellwerteinrichtung (45) ein Auslösesignal erzeugt, wenn das Bewegungssignal während einer vorbestimmten Zeitdauer unterhalb eines vorbestimmten Schwellwertes liegt, und eine Einrichtung bei Vorliegen des Auslösesignals die Telekommunikationsendeinrichtung (31) zum übermitteln eines Rufsignals an die zentrale Einrichtung (3) oder andere Endeinrichtungen (19; 20) aktiviert.

13. Verfahren nach einem oder mehreren der vorhergehenden Ansprüche, **dadurch gekennzeichnet, dass** der Bewegungssensor (40) ein Beschleunigungssensor oder Lagesensor ist.

14. Verfahren nach einem oder mehreren der vorhergehenden Ansprüche, **dadurch gekennzeichnet, dass** der Bewegungssensor (40) extern an die Telekommunikationsendeinrichtung (31) anschließbar ist.

15. Verfahren nach einem oder mehreren der vorhergehenden Ansprüche, **dadurch gekennzeichnet, dass** durch das Rufsignal in der zentralen Einrichtung (3) ein Passivnotrufprogramm (12) aktiviert wird, welches ein Notsignal oder eine Anwahl zu mindestens einer in der zentralen Einrichtung (3) abgelegten Anrufnummer erzeugt.

16. Verfahren nach einem oder mehreren der vorhergehenden Ansprüche, **dadurch gekennzeichnet, dass** das Notrufsignal ein über einen Lautsprecher (32) der Telekommunikationsendeinrichtung (31) ausgegebenes akustisches Signal ist.

17. Verfahren nach einem oder mehreren der vorhergehenden Ansprüche, **dadurch gekennzeichnet, dass** bei aktiviertem Passivnotrufprogramm (12) zusammen mit dem Rufsignal eine im Programm einer zentralen Einrichtung (3) abgelegte Information an einen beliebigen Empfänger übermittelt wird.

18. Verfahren nach einem oder mehreren der vorhergehenden Ansprüche, **dadurch gekennzeichnet, dass** der Standort der Telekommunikationsendeinrichtung (1; 4; 5; 31) mittels bekannten Ortungsmethoden von der zentralen Einrichtung (3) und/oder der Telekommunikationsendeinrichtung (1; 4; 5; 31) automatisch erfasst, aufbereitet und den Steuerprogrammen zur Verfügung gestellt wird.

19. Verfahren nach einem oder mehreren der vorhergehenden Ansprüche, **dadurch gekennzeichnet, dass** eine Anrufweiterleiteinrichtung (8) in der zentralen Einrichtung (3) vorgesehen ist, die bei aktiviertem Raumüberwachungsprogramm (9) ankommende Anrufe zu einer anderen Endeinrichtung weiterleitet.

20. Verfahren nach einem oder mehreren der vorhergehenden Ansprüche, **dadurch gekennzeichnet, dass** in dem Steuerprogramm (13) der zentralen Einrichtung eine Funktion zur Erkennung bestimmter Anrufe oder Rufnummern eingerichtet ist, wobei bei einem vorbestimmten Anruf ohne Aktivieren der Anrufanzeigeeinrichtung eine Verbindung des Anrufers mit der Telekommunikationsendeinrichtung (1; 4; 5; 31) hergestellt wird.

21. Verfahren nach einem oder mehreren der vorhergehenden Ansprüche, **dadurch gekennzeichnet, dass** in der Telekommunikationsendeinrichtung (31) ein Speicherbaustein (46) vorhanden ist, der bei aktiviertem Raumüberwachungsprogramm (9) von einem Mikrofon (39) und/oder einer Kamera (41) der Endeinrichtung aufgenommene Signale bei Überschreiten eines Schwellwertes speichert, solange bis eine Verbindung über eine zentrale Einrichtung (3) zu einer anderen Endeinrichtung (19; 20) hergestellt ist, und/oder eine Einrichtung vorhanden ist, die über die zentrale Einrichtung eine Verbindung zu der anderen Endeinrichtung herstellt und die gespeicherten Signale an diese andere Endeinrichtung überträgt.

22. Verfahren nach einem oder mehreren der vorhergehenden Ansprüche, **dadurch gekennzeichnet, dass** die Speicherfunktion (15) durch die zentrale Einrichtung (3) übernommen wird, sobald eine Verbindung zwischen der sendenden Telekommunikationsendeinrichtung (1; 4; 5; 31) und der zentralen Einrichtung besteht.

23. Verfahren nach einem oder mehreren der vorhergehenden Ansprüche, **dadurch gekennzeichnet, dass** eine in der zentralen Einrichtung (3) vom Teilnehmer einstellbare Verbindungszeitbegrenzungseinrichtung (14) vorgesehen ist, die bei Überschreiten eines voreinstellbaren Gebühren- oder Zeitlimits die Verbindung zwischen Telekommunikationsendeinrichtung (1; 4; 5; 31) und zentraler Einrichtung und/oder anderen Telekommunikationsendeinrichtungen (19; 20) unterbricht.

24. Telekommunikationssystem mit mindestens einer zentralen Einrichtung (3) und mindestens einer Telekommunikationsendeinrichtung (1; 4; 5; 31), die zur Kommunikation mit der zentralen Einrichtung und/oder anderen Telekommunikationsendeinrichtungen (19; 20) über mindestens ein Telekommunikationsnetz (2; 6; 7; 16; 17) ausgebildet ist, wobei die zentrale Einrichtung (3) in dem Telekommunikationsnetz (2; 6; 7; 16; 17) implementiert ist, und in der zentralen Einrichtung (3) ein oder mehrere Steuerprogramme (8-14) abgelegt sind,
wobei die Steuerprogramme durch Signale der Telekommunikationsendeinrichtung (1; 4; 5) aktivierbar sind, um in der Telekommunikationsendeinrichtung, der zentralen Einrichtung und/oder in anderen Telekommunikationsendeinrichtungen (19; 20) eine oder mehrere Funktionen auszulösen,
**dadurch gekennzeichnet,**
**dass** ein Steuerprogramm (9) ein Raumüberwachungsprogramm, ein Steuerprogramm (10) ein Aktivnotrufprogramm,
ein Steuerprogramm (11) ein Personenüberwachungsprogramm und ein Steuerprogramm (12) ein Passivnotrufprogramm ist,
wobei die Steuerprogramme zur Durchführung der Verfahrensschritte entsprechend der Ansprüche 1 - 23 ausgestaltet sind.

## Claims

1. Method for operating a telecommunications system having at least one central installation (3) and at least one telecommunications terminal device (1; 4; 5; 31) which is constructed for communication with the central installation (3) and/or other telecommunications terminal devices (19; 20) via at least one telecommunications network (2; 6; 7; 16; 17), wherein the central installation (3) is implemented in the telecommunications network (2; 6; 7; 16; 17) and in the central installation (3) one or more control programs (8-14) are stored, wherein the control programs are activatable by signals of the telecommunications terminal device (1; 4; 5; 31) in order to trigger one or more functions in the telecommunications terminal device (1; 4; 5; 31), the central installation (3) and/or in other telecommunications terminal devices (19; 20), **characterised in that** a control program (9) operates as a room monitoring program in order to transmit noises picked up by a microphone of the terminal device (4) via at least one telecommunications network (6; 19) to the central unit (3) and on to another terminal device (19),
that a control program (10) operates as an active emergency call program which is activated when a certain emergency call key is actuated in the terminal device (4) so that subsequently steps specified by the active emergency call program (10) are initiated and carried out by the central unit (3),
that a control program (11) operates as a people monitoring program in which one or more particular keys of the terminal device have the function of a reset key (36) and in a monitoring program of the central installation (3) an emergency signal or a call to a line number stored in the central unit is generated if after activation of the people monitoring program the reset key is not actuated within a period of time predetermined by a timing circuit (48), wherein the predeterminable period of time starts afresh when the reset key is actuated within the period of time and that a control program (12) operates as a passive emergency call program which in association with the terminal device (5) and a movement sensor connected to the terminal device (5) generates an emergency call signal if for a certain period of time the movement sensor does not issue an adequate movement signal.

2. Method according to claim 1, **characterised in that** the control programs (8-14) are activated by signals from the telecommunications terminal device (1; 4; 5; 31) which are triggered by certain keys, such as function keys, programmable keys and/or abbreviated dialling keys (35-38) of the telecommunications terminal device.

3. Method according to one or more of the preceding claims, **characterised in that** the control programs (8-14) are activated by signals from the telecommunications terminal device (1; 4; 5; 31) which are triggered by speech input or by certain events.

4. Method according to one or more of the preceding claims, **characterised in that** a control program (9) operates as a room monitoring program in which a call display device of the telecommunications terminal device (31) is switched to mute, a sound level device (44) connected behind a microphone (39) of this terminal device for generating a sound signal is activated when a predetermined sound level detected by the microphone is exceeded and by means of the sound signal the dialling of a line number of the central installation (3) stored in the terminal device is activated and a connection to the central installation is set up and a line number contained in the control program stored there is dialled on expiration of a predetermined period of time.

5. Method according to one or more of the preceding claims, **characterised in that** after activation of the room monitoring program (9) and after calling the stored line number a confirmation message from the dialled line number ensues.

6. Method according to one or more of the preceding claims, **characterised in that** when there is no confirmation by the line number or a dialled connection the dialling operation is repeated in previously defined time intervals and the central installation (3) stores the dialling attempts to the line number together with time information.

7. Method according to one or more of the preceding claims, **characterised in that** the stored dialling attempts together with the time information are retrievable from the central installation (3).

8. Method according to one or more of the preceding claims, **characterised in that** a control program (10) operates as an active emergency call program in which one or more particular keys of the telecommunications terminal device (31) have the function of an emergency call key (35) on whose actuation an emergency call signal is sent out to the central installation (3) which passes this emergency call on to at least one line number stored in the control program of the central installation.

9. Method according to one or more of the preceding claims, **characterised in that** when the active emergency call program is activated on actuation of a certain key of the terminal device (31) an emergency cal number stored in the central installation (3) is dialled and a message stored in the central installation is communicated to a certain receiver.

10. Method according to one or more of the preceding claims, **characterised in that** an alarm device is provided which when the people monitoring program is activated in the central installation (3) produces after expiration of a predetermined time interval during an alarm interval a visual and/or acoustic alarm signal, wherein an emergency signal is produced when after the start of the alarm signal the reset key (36) is not actuated within an alarm interval, wherein the time interval starts afresh after actuation of the reset key.

11. Method according to one or more of the preceding claims, **characterised in that** when the people monitoring program is activated in the event of an emergency signal at least one predetermined emergency call number is dialled and to this is transmitted an item of information or message stored in the program of a central installation (3).

12. Method according to one or more of the preceding claims, **characterised in that** a control program (12) operates as a passive emergency call program in which a movement sensor (40) is provided to generate a movement signal, a threshold value device (45) connected behind the movement sensor generates a triggering signal when the movement signal is below a predetermined threshold value during a predetermined period of time and on occurrence of the triggering signal a device activates the telecommunications terminal device (31) for transmitting a call signal to the central installation (3) or other terminal devices (19; 20).

13. Method according to one or more of the preceding claims, **characterised in that** the movement sensor (40) is an acceleration sensor or positional sensor.

14. Method according to one or more of the preceding claims, **characterised in that** the movement sensor (40) is externally connectable to the telecommunications terminal device (31).

15. Method according to one or more of the preceding claims, **characterised in that** by means of the call signal a passive emergency call program (12) in the central installation (3) is activated which generates an emergency signal or a call to at least one line number stored in the central installation (3).

16. Method according to one or more of the preceding claims, **characterised in that** the emergency call signal is an acoustic signal emitted by a loudspeaker (32) of the telecommunications terminal device (31).

17. Method according to one or more of the preceding claims, **characterised in that** when the passive emergency call program (12) is activated, together with the call signal an item of information stored in the program of a central installation (3) is transmitted to any desired receiver.

18. Method according to one or more of the preceding claims, **characterised in that** the location of the telecommunications terminal device (1; 4; 5; 31) is automatically detected by means of known position-finding methods by the central installation (3) and/or the telecommunications terminal device (1; 4; 5; 31), processed and made available to the control program.

19. Method according to one or more of the preceding claims, **characterised in that** a call forwarding device (8) is provided in the central installation (3) which when the room monitoring program (9) is activated forwards incoming calls to another terminal device.

20. Method according to one or more of the preceding claims, **characterised in that** a function for recognising certain calls or line numbers is installed in the control program (13) of the central installation, wherein in the event of a predetermined call a connection of the caller to the telecommunications terminal device (1; 4; 5; 31) is established without activation of the call display device.

21. Method according to one or more of the preceding claims, **characterised in that** in the telecommunications terminal device (31) there is a memory module (46) which when the room monitoring program (9) is activated stores signals recorded by a microphone (39) and/or a camera (41) of the terminal device when a threshold value is exceeded until a connection is established via a central installation (3) to another terminal device (19; 20) and/or a device is available which establishes a connection to the other terminal device via the central installation and transmits the stored signals to this other terminal device.

22. Method according to one or more of the preceding claims, **characterised in that** the memory function (15) is assumed by the central installation (3) as soon as there is a connection between the transmitting telecommunications terminal device (1; 4; 5; 31) and the central installation.

23. Method according to one or more of the preceding claims, **characterised in that** a connection-time limiting device adjustable by the subscriber is provided in the central installation (3) which breaks the connection between the telecommunications terminal device (1; 4; 5; 31) and the central installation and/or other telecommunications terminal device (19; 20) when a preadjustable charging or time limit is exceeded.

24. Telecommunications system having at least one central installation (3) and at least one telecommunications terminal device (1; 4; 5; 31) which is constructed for communication with the central installation and/or other telecommunications terminal devices (19; 20) via at least one telecommunications network (2; 6; 7; 16; 17), wherein the central installation (3) is implemented in the telecommunications network (2; 6; 7; 16; 17) and in the central installation (3) one or more control programs (8-14) are stored, wherein the control programs are activatable by signals of the telecommunications terminal device (1; 4; 5) in order to trigger one or more functions in the telecommunications terminal device, the central installation and/or in other telecommunications terminal devices (19; 20), **characterised in that** one control program (9) is a room monitoring program, one control program (10) is an active emergency call program, one control program (11) is a people monitoring program and one control program (12) is a passive emergency call program, wherein the control programs are equipped to carry out the steps of the method according to claims 1-23.

## Revendications

1. Procédé pour faire fonctionner un système de télécommunication comprenant au moins un dispositif central (3) et au moins un terminal de télécommunication (1 ; 4 ; 5 ; 31) qui est conçu pour communiquer avec le dispositif central (3) et/ou d'autres terminaux de télécommunication (19 ; 20) par l'intermédiaire d'au moins un réseau de télécommunication (2 ; 6 ; 7 ; 16 ; 17), étant précisé que le dispositif central (3) est mis en oeuvre dans le réseau de télécommunication (2 ; 6 ; 7 ; 16 ; 17) et qu'un ou plusieurs programmes de commande (8-14) sont entrés en mémoire dans le dispositif central (3), et que les programmes de commande sont aptes à être activés par des signaux du terminal de télécommunication (1 ; 4 ; 5 ; 31) pour déclencher une ou plusieurs fonctions dans celui-ci, dans le dispositif central (3) et/ou dans d'autres terminaux de télécommunication (19 ; 20),
**caractérisé en ce qu'**un programme de commande (9) fonctionne comme un programme de surveillance de l'espace pour transmettre à l'unité centrale (3) puis à un autre terminal (19), par l'intermédiaire d'au moins un réseau de télécommunication (6 ; 19), les bruits reçus par un micro du terminal (4),
**en ce qu'**un programme de commande (10) fonctionne comme un programme d'appel d'urgence actif qui est activé lorsqu'une touche d'appel d'urgence définie est activée sur le terminal (4), de sorte que des étapes prédéfinies par le programme d'appel d'urgence actif (10) sont ensuite déclenchées et exécutées par l'unité centrale (3),
**en ce qu'**un programme de commande (11) fonctionne comme un programme de surveillance des personnes avec lequel une ou plusieurs touches définies du terminal ont la fonction d'une touche de remise à zéro (36), et un signal d'urgence ou une sélection pour un numéro d'appel mis en mémoire dans l'unité centrale sont générés dans un programme de surveillance du dispositif central (3) si la touche de remise à zéro, après l'activation du programme de surveillance des personnes, n'est pas actionnée dans l'espace d'une durée apte à être prédéfinie par une horloge (48), une durée apte à être prédéfinie recommençant quand la touche de remise à zéro est actionnée dans l'espace de la durée,
et **en ce qu'**un programme de commande (12) fonctionne comme un programme d'appel d'urgence passif pour générer un signal d'appel d'urgence, en liaison avec le terminal (5) et un capteur de déplacement relié à celui-ci, lorsque le capteur de déplacement n'émet pas de signal de déplacement suffisant pendant une durée définie.

2. Procédé selon la revendication 1, **caractérisé en ce que** les programmes de commande (8-14) sont activés par des signaux du terminal de télécommunication (1 ; 4 ; 5 ; 31) qui sont déclenchés par des touches définies, telles que des touches de fonction, des touches programmables et/ou des touches de numérotation abrégée (35-38) du terminal de télécommunication.

3. Procédé selon l'une au moins des revendications précédentes, **caractérisé en ce que** les programmes de commande (8-14) sont activés par des signaux du terminal de télécommunication (1 ; 4 ; 5 ; 31) qui sont déclenchés par une entrée vocale ou par des événements définis.

4. Procédé selon l'une au moins des revendications précédentes, **caractérisé en ce qu'**un programme de commande (9) fonctionne comme un programme de surveillance de l'espace avec lequel un réglage silencieux est effectué pour le dispositif d'affichage d'appel du terminal de télécommunication (31), un dispositif de niveau sonore (44) monté en aval d'un micro (39) de ce terminal est activé pour générer un signal sonore quand un niveau de bruit prédéfini qui a été détecté par le micro est dépassé, et à l'aide du signal sonore, la sélection d'un numéro d'appel, mémorisé dans le terminal, du dispositif central (3) est activée et une liaison est établie avec le dispositif central, et un numéro d'appel contenu dans le programme de commande mis en mémoire à cet endroit est sélectionné après écoulement d'une durée prédéfinie.

5. Procédé selon l'une au moins des revendications précédentes, **caractérisé en ce qu'**un message de confirmation est émis du côté du numéro d'appel sélectionné, après l'activation du programme de surveillance de l'espace (9) et après l'appel du numéro d'appel mis en mémoire.

6. Procédé selon l'une au moins des revendications précédentes, **caractérisé en ce qu'**en l'absence de confirmation par le numéro d'appel ou par un raccordement sélectionné, l'opération de sélection est répétée à intervalles définis préalablement, et le dispositif central (3) met en mémoire les opérations de sélection vers le numéro d'appel, avec une information de temps.

7. Procédé selon l'une au moins des revendications précédentes, **caractérisé en ce que** les opérations de sélection mises en mémoire sont aptes à être extraites, avec l'information de temps, du dispositif central (3).

8. Procédé selon l'une au moins des revendications précédentes, **caractérisé en ce qu'**un programme de commande (10) fonctionne comme un programme d'appel d'urgence actif avec lequel une ou plusieurs touches définies du terminal de télécommunication (31) ont la fonction d'une touche d'appel d'urgence (35) dont l'actionnement entraîne l'envoi d'un signal d'appel d'urgence au dispositif central (3), lequel transmet cet appel d'urgence à au moins un numéro d'appel mis en mémoire dans le programme de commande du dispositif central.

9. Procédé selon l'une au moins des revendications précédentes, **caractérisé en ce que** lorsque le programme d'appel d'urgence actif est activé, lors de l'actionnement d'une touche définie du terminal (31), un numéro d'appel d'urgence mis en mémoire dans le dispositif central (3) est sélectionné et un message mis en mémoire dans le dispositif central est transmis à un récepteur défini.

10. Procédé selon l'une au moins des revendications précédentes, **caractérisé en ce qu'**il est prévu un dispositif d'avertissement qui, lorsque le programme de surveillance des personnes est activé dans le dispositif central (3) après écoulement d'un laps de temps prédéfini, génère un signal d'avertissement optique et/ou acoustique pendant un intervalle d'avertissement, un signal d'urgence étant généré lorsque la touche de remise à zéro (36), après le début du signal d'avertissement, n'est pas actionnée dans l'espace d'un intervalle d'avertissement, l'intervalle de temps recommençant après l'actionnement de la touche de remise à zéro.

11. Procédé selon l'une au moins des revendications précédentes, **caractérisé en ce que** lorsque le programme de surveillance des personnes est activé, dans le cas d'un signal d'urgence, au moins un numéro d'appel d'urgence prédéfini est sélectionné et une information ou un message mis en mémoire dans le programme d'un dispositif central (3) est transmis à ce numéro d'appel d'urgence.

12. Procédé selon l'une au moins des revendications précédentes, **caractérisé en ce qu'**un programme de commande (12) fonctionne comme un programme d'appel d'urgence passif avec lequel il est prévu un capteur de déplacement (40) pour générer un signal de déplacement, un dispositif de valeur seuil (45) monté en aval du capteur de déplacement génère un signal de déclenchement si le signal de déplacement est situé pendant une durée prédéfinie au-dessous d'une valeur seuil prédéfinie, et un dispositif actionne, en présence du signal de déclenchement, le terminal de télécommunication (31) pour transmettre un signal d'appel au dispositif central (3) ou à d'autres terminaux (19 ; 20).

13. Procédé selon l'une au moins des revendications précédentes, **caractérisé en ce que** le capteur de déplacement (40) est constitué par un capteur d'accélération ou par un capteur de position.

14. Procédé selon l'une au moins des revendications précédentes, **caractérisé en ce que** le capteur de déplacement (40) est apte à être raccordé de manière externe au terminal de télécommunication (31).

15. Procédé selon l'une au moins des revendications précédentes, **caractérisé en ce que** le signal d'appel dans le dispositif central (3) active un programme d'appel d'urgence passif (12) qui génère un signal d'urgence ou une sélection vers au moins un numéro d'appel mis en mémoire dans le dispositif central (3).

16. Procédé selon l'une au moins des revendications précédentes, **caractérisé en ce que** le signal d'appel d'urgence est constitué par un signal acoustique émis par l'intermédiaire d'un haut-parleur (32) du terminal de télécommunication (31).

17. Procédé selon l'une au moins des revendications précédentes, **caractérisé en ce que** lorsque le programme d'appel d'urgence passif (12) est activé, une information mise en mémoire dans le programme d'un dispositif central (3) est transmise avec le signal d'appel à un récepteur quelconque.

18. Procédé selon l'une au moins des revendications précédentes, **caractérisé en ce que** l'emplacement du terminal de télécommunication (1 ; 4 ; 5 ; 31) est détecté automatiquement par le dispositif central (3) et/ou le terminal de télécommunication (1 ; 4 ; 5 ; 31) à l'aide de méthodes de localisation connues, est traité et est fourni aux programmes de commande.

19. Procédé selon l'une au moins des revendications précédentes, **caractérisé en ce qu'**il est prévu dans le dispositif central (3) un dispositif de transfert d'appels (8) qui transfère vers un autre terminal les appels qui arrivent, quand le programme de surveillance de l'espace (9) est activé.

20. Procédé selon l'une au moins des revendications précédentes, **caractérisé en ce qu'**une fonction de reconnaissance d'appels ou de numéros d'appel définis, est installée dans le programme de commande (13) du dispositif central, moyennant quoi lors d'un appel prédéfini, sans l'activation du dispositif d'affichage d'appel, une liaison entre l'appelant et le terminal de télécommunication (1 ; 4 ; 5 ; 31) est établie.

21. Procédé selon l'une au moins des revendications précédentes, **caractérisé en ce qu'**il est prévu dans le terminal de télécommunication (31) un module de mémoire (46) qui, quand le programme de surveillance de l'espace (9) est activé, mémorise des signaux reçus par un micro (39) et/ou par une caméra (41) du terminal, s'ils dépassent une valeur seuil, jusqu'à ce qu'une liaison soit établie par l'intermédiaire d'un dispositif central (3) avec un autre terminal (19 ; 20), et/ou il est prévu un dispositif qui établit par l'intermédiaire du dispositif central une liaison avec l'autre terminal et qui transmet à cet autre terminal les signaux mémorisés.

22. Procédé selon l'une au moins des revendications précédentes, **caractérisé en ce que** la fonction de mémorisation (15) est assurée par le dispositif central (3) dès qu'il y a une liaison entre le terminal de télécommunication émetteur (1 ; 4 ; 5 ; 31) et le dispositif central.

23. Procédé selon l'une au moins des revendications précédentes, **caractérisé en ce qu'**il est prévu un dispositif limiteur de temps de liaison (14) qui est apte à être réglé dans le dispositif central (3) par l'abonné et qui, en cas de dépassement d'une limite de taxation ou de temps apte à être réglée préalablement, interrompt la liaison entre le terminal de télécommunication (1 ; 4 ; 5 ; 31) et le dispositif central et/ou d'autre terminaux de télécommunication (19 ; 20).

24. Système de télécommunication comportant au moins un dispositif central (3) et au moins un terminal de télécommunication (1 ; 4 ; 5 ; 31) qui est conçu pour la communication avec le dispositif central et/ou d'autres terminaux de télécommunication (19 ; 20) par l'intermédiaire d'au moins un réseau de télécommunication (2 ; 6 ; 7 ; 16 ; 17), le dispositif central (3) étant mis en oeuvre dans ce dernier, et un ou plusieurs programmes de commande (8-14) sont mis en mémoire dans le dispositif central (3), les programmes de commande étant aptes à être activés par les signaux du terminal de télécommunication (1 ; 4 ; 5) afin de déclencher dans le terminal de télécommunication, dans le dispositif central et/ou dans d'autres terminaux de télécommunication (19 ; 20), une ou plusieurs fonctions,
**caractérisé en ce qu'**un programme de commande (9) est constitué par un programme de surveillance de l'espace, un programme de commande (10) par un programme d'appel d'urgence actif, un programme de commande (11) par un programme de surveillance des personnes, et un programme de commande (12) par un programme d'appel d'urgence passif, les programmes de commande étant conçus pour exécuter les étapes de procédé selon les revendications 1 à 23.
